# EUROPEAN PATENT SPECIFICATION

(11) **EP 4 206 919 B1**
(45) Date of publication and mention of the grant of the patent: **10.09.2025**
(21) Application number: 21860050.0
(22) Date of filing: 30.07.2021
(51) Int. Cl.: H04L 67/51, H04L 67/565, H04L 69/08, H04L 69/18, H04L 69/24, G06F 15/163

(54) **PROXY SERVICE-BASED DEVICE CALLING METHOD, ELECTRONIC DEVICE, AND READABLE STORAGE MEDIUM**
PROXY-DIENSTBASIERTES VORRICHTUNGSANRUFVERFAHREN, ELEKTRONISCHE VORRICHTUNG UND LESBARES SPEICHERMEDIUM
PROCÉDÉ D'APPEL DE DISPOSITIF À BASE DE SERVICES MANDATAIRES, DISPOSITIF ÉLECTRONIQUE ET SUPPORT LISIBLE DE STOCKAGE

(30) Priority: 31.08.2020 CN 202010896989
(43) Date of publication of application: 05.07.2023
(73) Proprietor: Huawei Technologies Co., Ltd., Shenzhen, Guangdong 518129 (CN)
(72) Inventor: MA, Jiajun, Shenzhen, Guangdong 518129 (CN); LI, Jiarun, Shenzhen, Guangdong 518129 (CN); JIA, Can, Shenzhen, Guangdong 518129 (CN)
(74) Representative: Epping - Hermann - Fischer
(86) International application number: PCT/CN2021/109885
(87) International publication number: WO 2022/042210

(56) References cited:
- CN-A- 1 731 361
- CN-A- 101 216 760
- CN-A- 104 142 856
- CN-A- 105 867 928
- CN-A- 109 995 720
- CN-A- 109 995 720
- CN-A- 110 471 767
- US-A1- 2015 026 477
- US-B1- 6 314 445

## Description

### TECHNICAL FIELD

This application relates to the field of electronic devices, and in particular, to a proxy service-based device calling method, an electronic device, and a computer-readable storage medium.

### BACKGROUND

Existing consumer electronic devices may be roughly classified into two types: rich devices and thin devices. A rich device is a device with abundant memory and abundant storage space, and usually can support RPCs (Remote Procedure Call, remote procedure call)/IPC (Inter-Process Communication, inter-process communication), for example, a mobile phone, a liquid crystal display television, an in-vehicle infotainment system, a tablet computer, or a personal computer. A thin device is a device with small memory and small storage space, and is a device that usually can support remote communication only by sending messages, for example, a low-end watch, a headset, smart glasses, a refrigerator, or other devices.

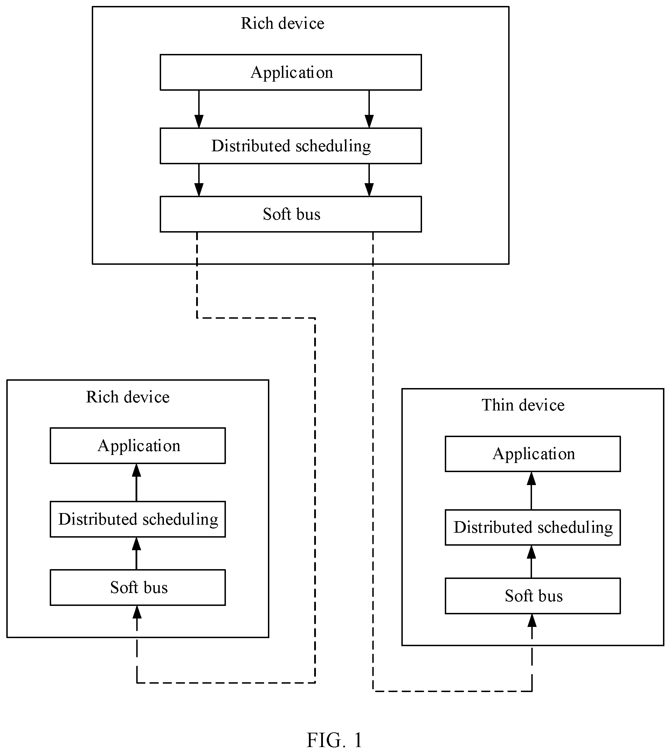

APIs (Application Programming Interface, application programming interface) provided for developers are different due to different product hardware. For example, a mobile phone communicates with a liquid crystal display television, and the mobile phone may use an AIDL (Android Interface Definition Language, Android interface definition language) interface provided by the liquid crystal display television, to start a display component of the liquid crystal display television. However, an interface provided by a low-end watch for a developer may be a message sending interface that is difficult to understand. As shown in FIG. 1, a developer communicates with a thin device and a rich device by using two sets of interfaces respectively. From CN 101 216 760 A systems and methods for dynamic mapping interface calling are known. Further, from CN 105 867 928 A apparatuses and methods for distributed system for data mining are known.

### SUMMARY

In view of this, a proxy service-based device calling method is provided according to appended claim 1, to unify distributed service interfaces of different types of electronic devices, and provide a unified API interface for a developer.

Further objects of the invention are a computer-readable storage medium according to claim 14 and an electronic device according to claim 15. Preferred embodiments are covered by the appended dependent claims.

According to this technical solution, distributed service interfaces of different types of electronic devices can be unified. Therefore, a device type of a called device may not be considered during distributed service scheduling and development, and device services of different types of electronic devices are accessed through a unified interface, to reduce a quantity of types of software development toolkits that perform access, lower a development threshold, and improve development experience.

### BRIEF DESCRIPTION OF DRAWINGS

FIG. 1 is a schematic diagram of a scenario of a distributed service calling mechanism in the conventional technology;
FIG. 2 is a schematic diagram of a scenario in which cross-device calling is implemented based on a proxy service process according to an embodiment of this application;
FIG. 3A is a schematic diagram of interaction in which a first electronic device performs distributed scheduling on a third electronic device according to an embodiment of this application;
FIG. 3B is a schematic diagram of interaction in which a first electronic device performs distributed scheduling on a second electronic device according to another embodiment of this application;
FIG. 4A is a schematic diagram of composition of software architectures of a first electronic device and a second electronic device according to an embodiment of this application;
FIG. 4B is a schematic diagram of composition of software architectures of a first electronic device and a third electronic device according to another embodiment of this application;
FIG. 5 is a schematic diagram of functional modules of a proxy service process according to an embodiment of this application;
FIG. 6 is a diagram of data exchange between a first electronic device and a third electronic device according to an embodiment of this application;
FIG. 7 is a schematic diagram of a scenario in which a first electronic device performs distributed scheduling on a third electronic device according to an embodiment of this application;
FIG. 8 is a schematic diagram of a scenario in which a first electronic device performs distributed scheduling on a second electronic device according to another embodiment of this application;
FIG. 9 is a schematic flowchart of a proxy service-based device calling method according to an embodiment of this application; and
FIG. 10 is a schematic diagram of a possible structure of a first electronic device according to an embodiment of this application.

### DESCRIPTION OF EMBODIMENTS

It should be noted that, in this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In this specification, the claims, and the accompanying drawings of this application, terms "first", "second", "third", "fourth", and the like (if existent) are intended to distinguish between similar objects but do not necessarily indicate a specific order or sequence.

For ease of understanding, some concepts related to embodiments of this application are described as examples for reference.

Electronic devices such as a personal computer, a handheld device (for example, a mobile phone), a smartwatch, and smart glasses may perform communication connection through a wireless local area network (Wireless Local Area Network, WLAN). For example, the wireless local area network in embodiments of this application may be Wi-Fi.

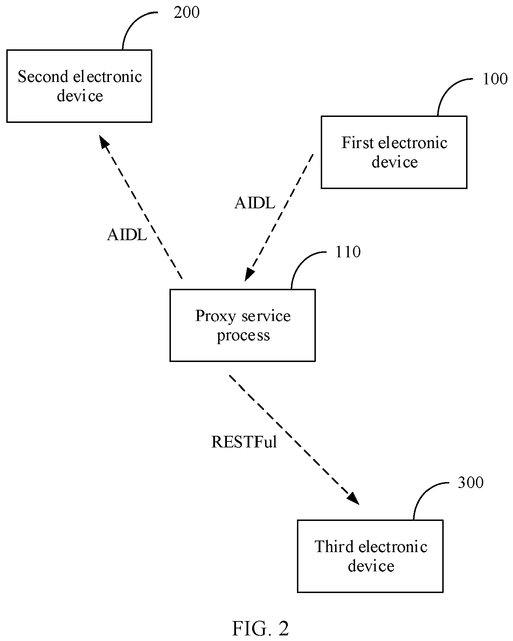

A diagram of a proxy service-based device calling scenario provided in an embodiment of the present invention is described below with reference to FIG. 2 as an example.

A proxy service process 110 is pre-installed on a first electronic device 100, and the first electronic device 100 is a device of a first type. When the first electronic device 100 successfully performs networking with another electronic device (for example, a second electronic device 200 or a third electronic device 300 in FIG. 2), the first electronic device 100 may call the electronic device by using the proxy service process 110. The electronic device may be the device of the first type, or may be a device of a second type.

In some embodiments, the device of the first type may be an electronic device with abundant memory and abundant storage space. Usually, the device of the first type may implement inter-process communication by using an RPC (Remote Procedure Call, remote procedure call) or IPC (Inter-Process Communication, inter-process communication). The device of the first type has a first communication interface. For example, the first communication interface is an AIDL (Android Interface Definition Language, Android interface definition language) interface. Devices of the first type may include a mobile phone, a liquid crystal display television, an in-vehicle infotainment system, a tablet computer, a personal computer, and the like.

The device of the second type may be an electronic device with small memory and small storage space. Usually, the device of the second type can implement inter-process communication only by sending a message (for example, SendMessage/PostMessage). The device of the second type has a second communication interface. For example, the second communication interface is a RESTful (Representational State Transfer, representational state transfer) interface. Devices of the second type may include a low-end smartwatch, a wireless headset, smart glasses, a smart refrigerator, and the like.

In some embodiments, the proxy service process 110 may be encapsulated into a software installation package, and installed and run on the first electronic device 100. The first electronic device 100 may implement a proxy service by using the proxy service process 110, for example, support calling for the AIDL interface and the RESTful interface. When the first electronic device 100 needs to call a service function on the electronic device, the first electronic device 100 may call the proxy service process 110 by using the AIDL interface, and then the proxy service process 110 calls a corresponding interface of the electronic device, and forwards a calling request for the service function to the electronic device. Therefore, a developer can call service functions on electronic devices with different types of interfaces by communicating with the proxy service process only by using one type of communication interface, and does not need to recognize a device type of another electronic device (for example, the second electronic device 200 or the third electronic device 300) before calling a service function, and does not need to prepare APIs for a plurality of device types either.

As shown in FIG. 2, it is assumed that both the first electronic device 100 and the second electronic device 200 are devices of the first type, and the third electronic device 300 is the device of the second type. When the first electronic device 100 successfully performs networking with the second electronic device 200 and the first electronic device 100 needs to call a service function on the second electronic device 200, the first electronic device 100 calls the proxy service process 110 by using the AIDL interface, and then the proxy service process 110 schedules the second electronic device 200 by using the AIDL interface. When the first electronic device 100 successfully performs networking with the third electronic device 300 and the first electronic device 100 needs to call a service function on the third electronic device 300, the first electronic device 100 calls the proxy service process 110 by using the AIDL interface, and then the proxy service process 110 schedules the third electronic device 300 by using the RESTful interface.

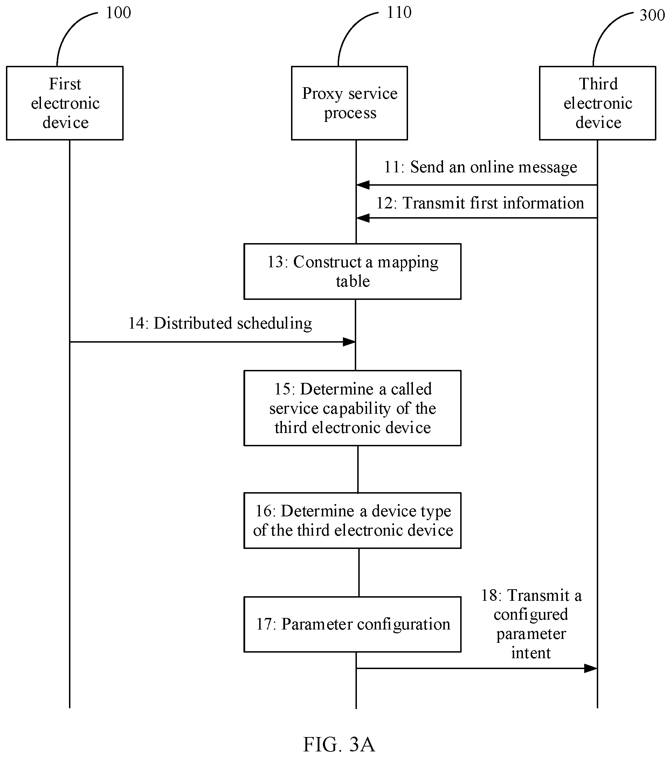

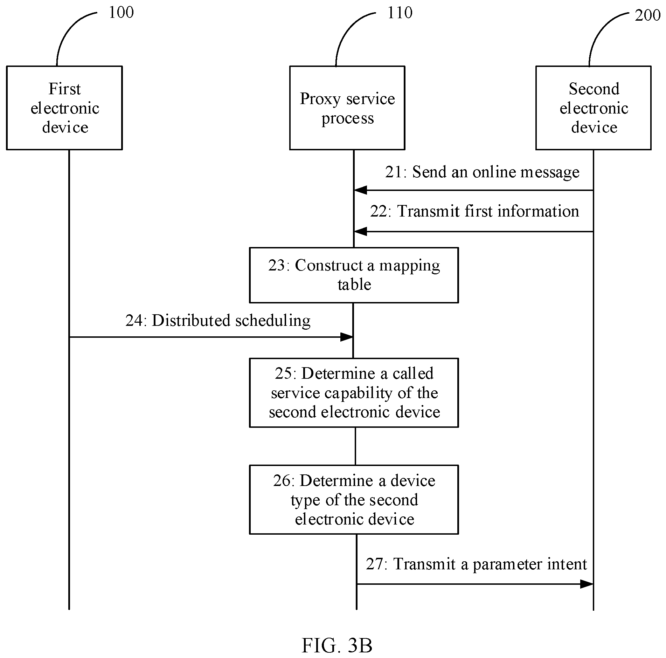

A proxy service-based device calling interaction process provided in an embodiment of the present invention is described below with reference to FIG. 3A and FIG. 3B as an example.

For ease of description below, in an application scenario described below, a proxy service process 110 is pre-installed on a first electronic device 100, the first electronic device 100 is a device of a first type, a third electronic device 300 is a device of a second type, a first application is further installed on the first electronic device 100, and a second application is installed on the third electronic device 300. As shown in FIG. 3A, a process of scheduling the third electronic device 300 by the first electronic device 100 by using the proxy service process 110 may specifically include the following steps.
11: The first electronic device 100 performs networking with the third electronic device 300 (for example, the first electronic device 100 and the third electronic device 300 are located in a same local area network). After the first electronic device 100 successfully performs networking with the third electronic device 300, the third electronic device 300 sends a go-online message to the proxy service process 110 of the first electronic device 100.
12: The third electronic device 300 transmits first information to the proxy service process 110 of the first electronic device 100, where the first information includes a service capability that can be externally provided by the third electronic device 300.
13: The proxy service process 110 constructs a mapping table based on the first information of the third electronic device 300 and interface information of the first electronic device 100, where the mapping table includes a mapping relationship between a plurality of interface functions of the first electronic device 100 and a plurality of service capabilities of the third electronic device 300.
14: When the first application on the first electronic device 100 initiates distributed scheduling to the second application on the third electronic device 300, the first application calls the proxy service process 110 by using an AIDL interface.
15: The proxy service process 110 obtains an interface function matching the current distributed scheduling, and determines, based on the mapping table and the obtained interface function, a currently called service capability of the third electronic device 300.
16: The proxy service process 110 obtains a device ID of the third electronic device 300 from a parameter intent of the current distributed scheduling, and determines, based on the device ID of the third electronic device 300, that the third electronic device 300 is the device of the second type.
17: The proxy service process 110 performs parameter configuration on a plurality of parameters in the parameter intent, including converting the plurality of parameters in the parameter intent into a RESTful format.
18: The proxy service process 110 transmits a configured parameter intent to the third electronic device 300 by using a communication mechanism (for example, SendMessage) of a RESTful interface.

In another scenario, a proxy service process 110 is pre-installed on a first electronic device 100, both the first electronic device 100 and a second electronic device 200 are devices of a first type, and a second application is further installed on each of the first electronic device 100 and the second electronic device 200. As shown in FIG. 3B, a process of performing, by the first electronic device 100, distributed scheduling on the second electronic device 200 by using the proxy service process 110 is as follows:
21: The first electronic device 100 performs networking with the second electronic device 200. After the first electronic device 100 successfully performs networking with the second electronic device 200, the second electronic device 200 sends a go-online message to the first electronic device 100.
22: The second electronic device 200 transmits first information to the proxy service process 110 of the first electronic device 100, where the first information includes a service capability that can be externally provided by the second electronic device 200.
23: The proxy service process 110 constructs a mapping table based on the first information of the second electronic device 200 and interface information of the first electronic device 100, where the mapping table includes a mapping relationship between a plurality of interface functions of the first electronic device 100 and a plurality of service capabilities of the second electronic device 200.
24: When a first application on the first electronic device 100 initiates distributed scheduling to a first application on the second electronic device 200, the first application on the first electronic device 100 calls the proxy service process 110 by using an AIDL interface.
25: The proxy service process 110 obtains an interface function matching the current distributed scheduling, and determines, based on the mapping table and the obtained interface function, a currently called service capability of the second electronic device 200.
26: The proxy service process 110 obtains a device ID of the second electronic device 200 from a parameter intent of the current distributed scheduling, and determines, based on the device ID of the second electronic device 200, that the second electronic device 200 is the device of the first type.
27: The proxy service process 110 transmits the parameter intent to the second electronic device 200 by using a communication mechanism (for example, an RPC) of the AIDL interface.

In this application, service interfaces of different types of devices are unified by using a proxy service process installed on a calling initiator (for example, the first electronic device 100), and the proxy service process forwards a calling request to a called entity (for example, the second electronic device 200). A device type of the called entity does not need to be distinguished first.

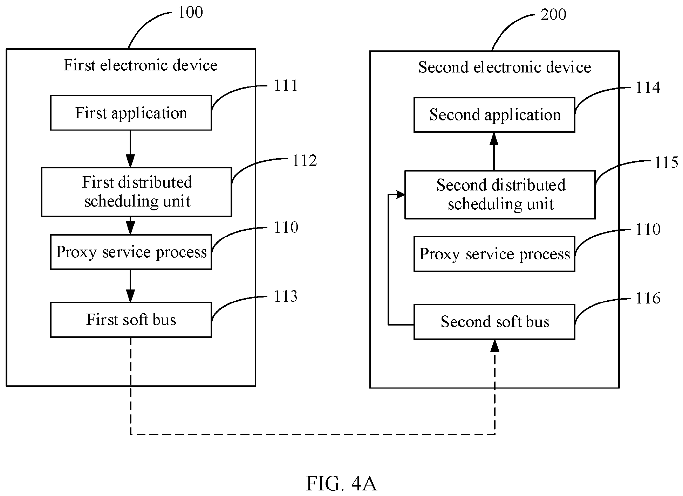

FIG. 4A is a schematic diagram of a software architecture in which a first electronic device 100 performs distributed scheduling on a second electronic device 200 according to an embodiment of this application.

Both the first electronic device 100 and the second electronic device 200 are devices of a first type. The first electronic device 100 includes a proxy service process 110, a first application 111, a first distributed scheduling unit 112, and a first soft bus 113. The second electronic device 200 includes a proxy service process 110, a second application 114, a second distributed scheduling unit 115, and a second soft bus 116.

The proxy service process 110 may provide a unified cross-device distributed API, so that a developer can implement cross-device interaction by using the unified distributed API without considering a device type of a called electronic device. The first application 111 and the second application 114 may be determined according to an actual application requirement. This is not limited herein. For example, the first application 111 and the second application 114 may be a map app, a take-out app, an e-commerce app, or the like. The first distributed scheduling unit 112 and the second distributed scheduling unit 115 may implement device startup, cross-device service calling, and the like. The first soft bus 113 and the second soft bus 116 may provide functions such as cross-device communication, device go-online monitoring, device go-offline monitoring, and device information querying.

When the first application 111 on the first electronic device 100 initiates distributed scheduling to the second application 114 on the second electronic device 200, a distributed scheduling request output by the first application 111 may be transmitted to the proxy service process 110 on the first electronic device 100 by using the first distributed scheduling unit 112. The proxy service process 110 may transmit a parameter intent of the distributed scheduling request to the second electronic device 200 through the first soft bus 113. For example, the first soft bus 113 transmits the parameter intent to the second soft bus 116 by using an RPC. The second soft bus 116 may transmit the received parameter intent to the second application 114 by using the second distributed scheduling unit 115, so that the second application 114 can respond to the distributed scheduling initiated by the first application 111.

Correspondingly, when the second application 114 on the second electronic device 200 initiates distributed scheduling to the first application 111 on the first electronic device 100, a distributed scheduling request output by the second application 114 may be transmitted to the proxy service process 110 on the second electronic device 200 by using the second distributed scheduling unit 115. The proxy service process 110 may transmit a parameter intent of the distributed scheduling request to the first electronic device 100 through the second soft bus 116. For example, the second soft bus 116 transmits the parameter intent to the first soft bus 113 by using an RPC. The first soft bus 113 may transmit the received parameter intent to the first application 111 by using the first distributed scheduling unit 112, so that the first application 111 can respond to the distributed scheduling initiated by the second application 114.

In some embodiments, when the first electronic device 100 successfully performs networking with the second electronic device 200, the first soft bus 113 and the second soft bus 116 may allocate corresponding device IDs to the first electronic device 100 and the second electronic device 200 respectively according to a preset device ID generation rule. The preset device ID generation rule may include a first generation rule and a second generation rule. The first generation rule is used to generate a device ID for the device of the first type, and the second generation rule is used to generate a device ID for a device of a second type. Therefore, subsequently, whether a called entity is the device of the first type or the device of the second type can be determined based on an obtained device ID. For example, the first generation rule is used to generate a two-digit device ID for an electronic device of the first type, and the second generation rule is used to generate a three-digit device ID for an electronic device of the second type.

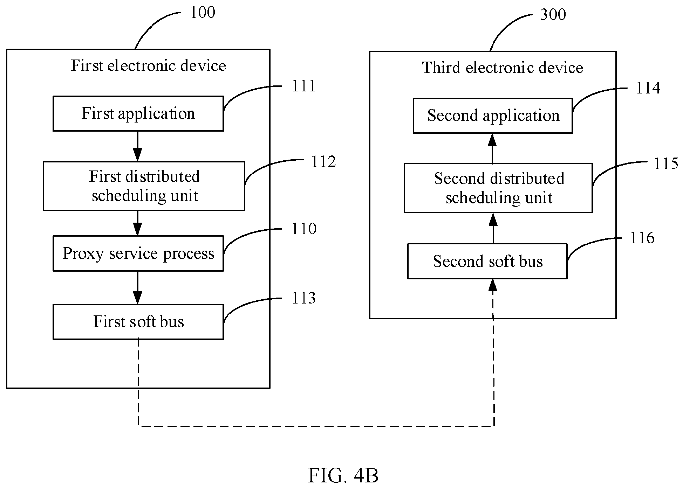

FIG. 4B is a schematic diagram of a software architecture in which a first electronic device 100 performs distributed scheduling on a third electronic device 300 according to an embodiment of this application.

The first electronic device 100 is a device of a first type, and the third electronic device 300 is a device of a second type. The first electronic device 100 includes a proxy service process 110, a first application 111, a first distributed scheduling unit 112, and a first soft bus 113. The third electronic device 300 includes a second application 114, a second distributed scheduling unit 115, and a second soft bus 116.

When the first application 111 on the first electronic device 100 initiates distributed scheduling to the second application 114 on the third electronic device 300, a distributed scheduling request output by the first application 111 may be transmitted to the proxy service process 110 on the first electronic device 100 by using the first distributed scheduling unit 112. The proxy service process 110 may perform parameter configuration on a parameter intent of the distributed scheduling request, and transmit a parameter intent obtained through parameter configuration to the third electronic device 300 through the first soft bus 113. For example, the first soft bus 113 transmits the parameter intent obtained through parameter configuration to the second soft bus 116 by using SendMessage. The second soft bus 116 may transmit the received parameter intent to the second application 114 by using the second distributed scheduling unit 115, so that the second application 114 can respond to the distributed scheduling initiated by the first application 111.

In this application, a proxy service process is set on the device of the first type to perform a proxy service mechanism, and the device of the first type serves as a proxy for a device service capability of a called entity. A developer only needs to communicate with the proxy service process by using an AIDL interface. The proxy service process finally chooses to communicate with the called entity (the called entity is the device of the first type) in an AIDL form or communicate with the called entity (the called entity is the device of the second type) in a RESTful form.

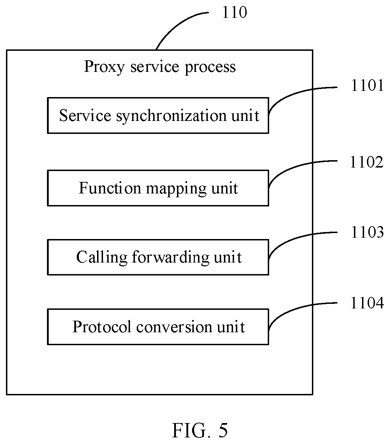

As shown in FIG. 5, the proxy service process 110 may be split into a service synchronization unit 1101, a function mapping unit 1102, a calling forwarding unit 1103, and a protocol conversion unit 1104.

When the first electronic device 100 successfully performs networking with the second electronic device 200 and the first electronic device 100 detects, through the first soft bus 113, that the second electronic device 200 is online (that is, joins a networking environment), the second electronic device 200 transmits a service capability and a device ID to the proxy service process 110 on the first electronic device 100 through the second soft bus 116. The service synchronization unit 1101 may construct a service capability enabling information table for the second electronic device 200 based on the device ID and the service capability of the second electronic device 200.

For example, the device ID of the second electronic device 200 is id11, and the service capability of the second electronic device 200 includes an application startup capability (StartFA), an application stop capability (StopFA), an application update capability (UpdateFA), and an application installation capability (InstallFA). The service capability enabling information table that may be constructed by the service synchronization unit 1101 for the second electronic device 200 is as follows: "id11: StartFA:1; StopFA:1, UpdateFA:1; InstallFA:1". "StartFA:1" indicates that the StartFA capability is enabled.

For another example, a device ID of the third electronic device 300 is id12, and a service capability of the third electronic device 300 includes an application startup capability, an application stop capability, and an application update capability. A service capability enabling information table that may be constructed by the service synchronization unit 1101 for the third electronic device 300 is as follows: "id12: StartFA:1; StopFA:1; UpdateFA:1; InstallFA:0". "InstallFA:0" indicates that an application installation capability is disabled. When responding to the distributed scheduling request to the third electronic device 300, the proxy service process 110 may learn of an enabling status of a service capability of the called entity by querying the enabling information table, and determine whether the third electronic device 300 can successfully respond to the distributed scheduling request.

In some embodiments, when the first electronic device 100 initiates distributed scheduling to a service capability SA1 of the third electronic device 300, the proxy service process 110 may first determine, based on the enabling information table, whether the service capability SA1 of the third electronic device 300 is enabled. If the service capability SA1 of the third electronic device 300 is enabled, the proxy service process 110 may continue to perform a subsequent calling operation, for example, obtain the device ID of the third electronic device 300 from a parameter intent. If the service capability SA1 of the third electronic device 300 is disabled, it indicates that the third electronic device 300 cannot respond to the distributed scheduling on the service capability SA1, and calling exception prompt information may be directly returned. For example, a calling exception prompt may be output on a display of the first electronic device 100.

The function mapping unit 1102 may construct a mapping table based on first information of the second electronic device 200 and interface information of the first electronic device 100. The mapping table may include a mapping relationship between a plurality of interface functions of the first electronic device 100 and a plurality of service capabilities of the second electronic device 200. A one-to-one mapping relationship may be established between the plurality of service capabilities of the second electronic device 200 and the plurality of interface functions of the first electronic device 100. For example, the second electronic device 200 includes four service capabilities, and the function mapping unit 1102 establishes a one-to-one mapping relationship between the four service capabilities of the second electronic device 200 and four interface functions of the first electronic device 100.

It can be understood that the function mapping unit 1102 may also construct a mapping table based on first information of the third electronic device 300 and the interface information of the first electronic device 100.

For example, AIDL interface information externally provided by the first electronic device 100 is defined as follows:

```
          interface DistributeScheduleInterface{
          void startFA(Intent intent)
          void stopFA(Intent intent)
          void updateFA(Intent intent)
          void installFA(Intent intent)
          }.
```

The function mapping unit 1102 may construct, based on the AIDL interface information of the first electronic device 100 and the service capabilities of the second electronic device 200, a mapping table including the following mapping relationship:
functionMap_[START_FA] = &DistributedSchedStub: : StartF A;
functionMap_[STOP_FA] = &DistributedSchedStub:: StopFA,
functionMap_[UPDATE_FA] = &DistributedSchedStub::UpdateFA;
functionMap_[INSTALL_FA] = &DistributedSchedStub::InstallFA.

When the first electronic device 100 initiates distributed scheduling to a service capability of the second electronic device 200, the calling forwarding unit 1103 may determine, based on the mapping table constructed by the function mapping unit 1102, a called service capability of the second electronic device 200. The calling forwarding unit 1103 may further obtain the device ID of the second electronic device 200 from a parameter intent of a current distributed scheduling request, and may further determine, based on the device ID of the second electronic device 200, whether the second electronic device 200 is the device of the first type or the device of the second type. Because the second electronic device 200 is the device of the first type, the calling forwarding unit 1103 may directly communicate with the second electronic device 200 by using a communication mechanism of a first communication interface, for example, communicate with the second electronic device 200 by using an RPC of DBinder.

When the first electronic device 100 initiates distributed scheduling to a service capability of the third electronic device 300, because the third electronic device 300 is the device of the second type, the first electronic device 100 cannot communicate with the third electronic device 300 by using an RPC, and needs to first perform, by using the protocol conversion unit 1104, protocol conversion on a parameter intent transmitted to the third electronic device 300, and then communicate with the third electronic device 300 by using a communication mechanism of a second communication interface, for example, communicate with the third electronic device 300 by using SendMessage.

In some embodiments, the protocol conversion may include: deserializing a plurality of parameters in the parameter intent, and converting deserialized parameters into a RESTful format. For example, the deserialized parameters may be converted into the RESTful format by using a definition of an XML format or a JSON format. A definition of each parameter in the parameter intent may be shown in Table 1.

**Table 1**

| Sequence number | Parameter | Name | Type | Function |
|---|---|---|---|---|
| 1 | ServiceId | Service ID | Int | Specifies a distributed service on an accessed called entity. |
| 2 | CommandId | Command ID | Int | Specifies a called service capability of the called entity. |
| 3 | UId | Identity ID | Int | Used for identity authentication. |
| 4 | CallingPkgName | Calling initiator package name | String | Specifies an application package name of a calling initiator, used for trustlist authentication. |
| 5 | CalledPkgName | Called entity package name | String | Specifies an application package name of the called entity. |
| 6 | SignatureInfo | Calling initiator signature | String | Signature information of an application on the calling initiator, used for comparison with application information on the called entity to implement signature authentication. |
| 7 | AbilityName | Called entity ability name | String | Specifies an ability name of a called application on the called entity. |
| 8 | DeviceId | Device ID | String | Specifies a device ID of the called entity. |
| 9 | DataPayLoad | Other information | List<String> | Other information. |

In Table 1, the DataPayLoad parameter may indicate information other than the parameters with the sequence numbers 1 to 8 in the parameter intent.

In some embodiments, the protocol conversion unit 1104 may convert a plurality of specified parameters in the parameter intent into a RESTful format, and a plurality of parameters converted into the RESTful format may be transmitted, by using the SendMessage communication mechanism, to an electronic device that is the device of the second type. The plurality of specified parameters may include the ServiceId parameter, the CommandId parameter, the UId parameter, the CallingPkgName parameter, the CalledPkgName parameter, the SignatureInfo parameter, and the AbilityName parameter.

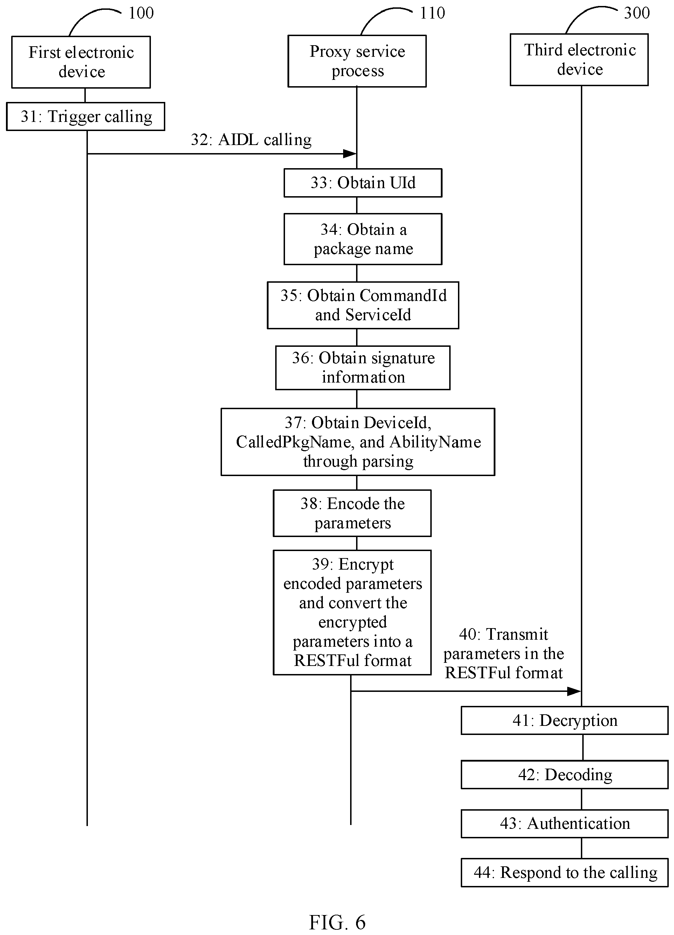

FIG. 6 is a diagram of data exchange between a first electronic device 100 and a third electronic device 300. The first electronic device 100 is a device of a first type, and the third electronic device 300 is a device of a second type. A process of data exchange between the first electronic device 100 and the third electronic device 300 is as follows:
31: When a user chooses, in an application A of the first electronic device 100, to perform distributed scheduling on an application B of the third electronic device 300, for example, the distributed scheduling is to start the application B of the third electronic device 300, calling for StartFA is triggered.
32: The application A calls a proxy service process 110 by using an IPC communication mechanism of an AIDL interface.
33: The proxy service process 110 receives the calling and obtains UId of the application A.
34: Obtain a package name (CallingPkgName) of the application A from a package management service by using UId.
35: Obtain CommandId and ServiceId from a mapping table.
36: Obtain signature information (SignatureInfo) of the application A from the package management service.
37: Obtain DeviceId, CalledPkgName, and AbilityName from a parameter intent through parsing.
38: Encode the foregoing parameters (UId, CallingPkgName, CommandId, ServiceId, SignatureInfo, DeviceId, CalledPkgName, and AbilityName) by using a TLV (Type, Length, Value) encoding algorithm.
39: Encrypt encoded parameters and convert the encrypted parameters into a RESTful format.
40: Call a message transfer function to transmit parameters in the RESTful format to the third electronic device 300.
41: Decrypt a received message.
42: Decode, by using a TLV decoding algorithm, parameters obtained through decryption.
43: Perform UId authentication and package name trustlist authentication, obtain signature information of the application B, and compare the signature information of the application B with the signature information of the application A to implement signature authentication.
44: When all the foregoing authentication (UId authentication, package name trustlist authentication, and signature authentication) succeeds, it indicates that the third electronic device 300 can respond to the distributed scheduling. In this case, the StartFA function is called to start the application B of the third electronic device 300.

In some embodiments, a policy for the UId authentication may be determining whether UId is less than or equal to 1000, to determine whether the application A is a system application of a calling initiator, and if UId is less than or equal to 1000, the UId authentication succeeds; a policy for the package name trustlist authentication may be determining whether a package name of an application is in a preset trustlist, and if the package name of the application is in the preset trustlist, the application is a third-party application with a privilege (for example, an application capable of initiating distributed scheduling), and the package name trustlist authentication succeeds; and a policy for the signature authentication may be determining whether signature information of an initiator application of a distributed calling initiator is the same as signature information of a called application of a called entity, and if the signature information is the same, the signature authentication succeeds.

In some embodiments, alternatively, only one or two of the UId authentication, the package name trustlist authentication, and the signature authentication may be performed in step 44 of the data exchange process.

In some embodiments, an encryption algorithm for encrypting the encoded parameters and a decryption algorithm for decrypting the received message may be selected according to an actual requirement. When the encoded parameters do not include sensitive information (confidential information), the operations of encrypting and decrypting the encoded parameters may be alternatively omitted.

In some embodiments, performing TLV encoding on a parameter may include: setting a type name of the parameter, reading a field length, and setting a type value of the parameter. For example, if a type of the parameter is String, a String16 may be converted into a String8; and performing TLV decoding on a parameter obtained through decryption may include: reading a type name of the parameter, reading a field length, and reading a type value of the parameter.

In some embodiments, if the message transfer function transmits the parameters in the RESTful format to the third electronic device 300 through synchronous communication, after transmitting a message to the third electronic device 300, the message transfer function needs to wait for a response message returned by the third electronic device 300 for reception of the parameters in the RESTful format. For example, if the parameters in the RESTful format are transmitted to the third electronic device 300 by using a SendMessage function, the SendMessage function needs to continue to wait for a response message returned by the third electronic device 300 for reception of the parameters in the RESTful format.

If the message transfer function transmits the parameters in the RESTful format to the third electronic device 300 through asynchronous communication, after transmitting a message to the third electronic device 300, the message transfer function does not need to wait for a response message. For example, if the parameters in the RESTful format are transmitted to the third electronic device 300 by using a PostMessage function, the PostMessage function does not need to wait for a response message.

### Embodiment 1

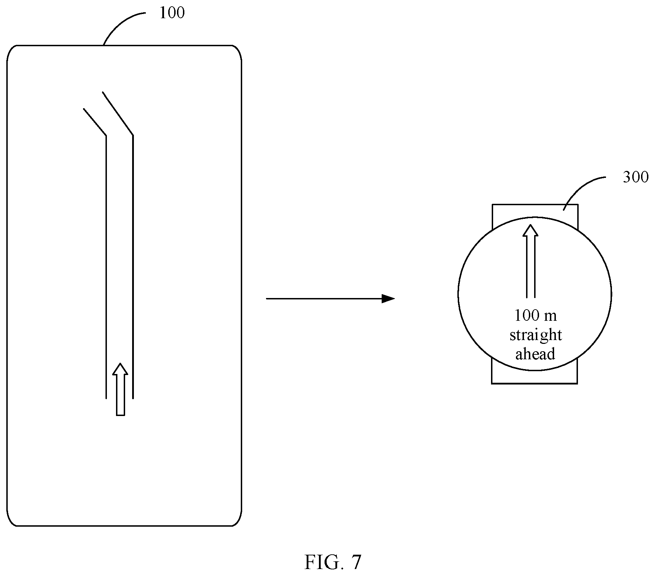

In Embodiment 1, a first electronic device 100 is a device of a first type, and a third electronic device 300 is a device of a second type. As shown in FIG. 7, the first electronic device 100 is a mobile phone, and the third electronic device 300 is a smartwatch. A proxy service process 110 and a map application B1 are installed on the mobile phone, and a map application B2 is installed on the smartwatch. In Embodiment 1, the mobile phone and the smartwatch can perform linkage navigation, including but not limited to starting the map application B1 for navigation, updating navigation information, and ending navigation. Specifically, a process of performing linkage navigation by the mobile phone and the smartwatch may include the following steps.
51: The mobile phone successfully performs networking with the smartwatch, and a soft bus of the mobile phone and a soft bus of the smartwatch generate device IDs of the mobile phone and the smartwatch respectively.
52: The smartwatch synchronizes a service capability of the smartwatch to the proxy service process 110 on the mobile phone through the soft bus.
53: The proxy service process 110 constructs a mapping table based on the service capability of the smartwatch, where the mapping table includes a mapping relationship between a plurality of interface functions of the mobile phone and a plurality of service capabilities of the smartwatch.
54: A user starts the map application B1 on the mobile phone and taps a navigation mutual-assistance icon in the map application B1 to initiate distributed navigation scheduling to the smartwatch.
55: The mobile phone calls StartFA.
56: The proxy service process determines, based on the mapping table and the StartFA, a currently called service capability of the smartwatch.
57: The proxy service process performs protocol conversion on a parameter intent.
58: The proxy service process calls a RESTful interface to start the navigation application B2 on the smartwatch.
59: With continuous changes of geographical location information, the mobile phone calls UpdateFA to update information on a navigation interface.
60: The proxy service process determines, based on the mapping table and the UpdateFA, a currently called service capability of the smartwatch.
61: The proxy service process performs protocol conversion on a parameter intent.
62: The proxy service process calls the RESTful interface to update displayed information of the navigation application B2 on the smartwatch.
63: Navigation is complete, and the user taps a navigation end icon in the map application B1 on the mobile phone.
64: The mobile phone calls StopFA.
65: The proxy service process determines, based on the mapping table and the StopFA, a currently called service capability of the smartwatch.
66: The proxy service process performs protocol conversion on a parameter intent.
67: The proxy service process calls the RESTful interface to stop the navigation application B2 on the smartwatch.

### Embodiment 2

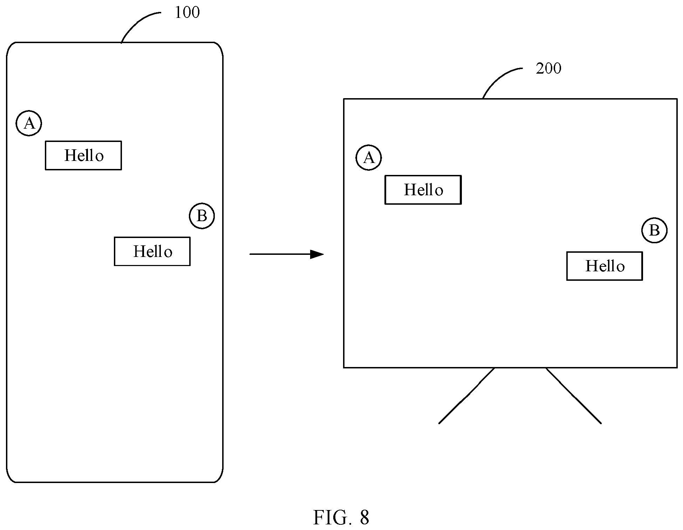

In Embodiment 2, both a first electronic device 100 and a second electronic device 200 are devices of a first type. As shown in FIG. 8, the first electronic device 100 is a mobile phone, and the second electronic device 200 is a smart television. A proxy service process 110 and a chat application C1 are installed on the mobile phone, and a chat application C2 is installed on the smart television. In Embodiment 2, the mobile phone can project a screen to the smart television. Specifically, a process of performing real-time screen projection and display by the mobile phone and the smart television may include the following steps.
71: The mobile phone successfully performs networking with the smart television, and a soft bus of the mobile phone and a soft bus of the smart television generate device IDs of the mobile phone and the smart television respectively.
72: The smart television synchronizes a service capability of the smart television to the proxy service process 110 on the mobile phone through the soft bus.
73: The proxy service process 110 constructs a mapping table based on the service capability of the smart television, where the mapping table includes a mapping relationship between a plurality of interface functions of the mobile phone and a plurality of service capabilities of the smart television.
74: A user starts the chat application C1 on the mobile phone and taps a screen projection mutual-assistance icon in the chat application C1 to initiate distributed screen projection scheduling to the smart television.
75: The mobile phone calls StartFA.
76: The proxy service process determines, based on the mapping table and the StartFA, a currently called service capability of the smart television.
77: The proxy service process calls an AIDL interface to start the chat application C2 on the smart television.
78: With an update of content in a chat window of the chat application, the mobile phone calls UpdateFA to update information in the chat window.
79: The proxy service process determines, based on the mapping table and the UpdateFA, a currently called service capability of the smart television:
80: The proxy service process calls the AIDL interface to update displayed information of the chat application C2 on the smart television.
81: A conversation is complete, and the user taps a conversation end icon in the chat application C1 on the mobile phone.
82: The mobile phone calls StopFA.
83: The proxy service process determines, based on the mapping table and the StopFA, a currently called service capability of the smart television.
84: The proxy service process calls the AIDL interface to stop the chat application C2 on the smart television.

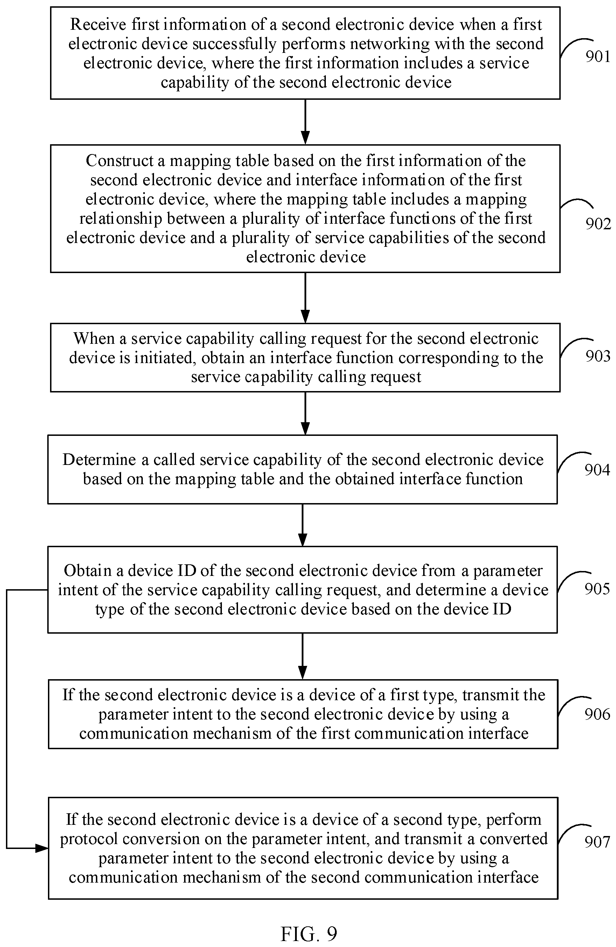

As shown in FIG. 9, an embodiment of this application provides a proxy service-based device calling method, applied to a first electronic device 100. The first electronic device 100 can support a local area network, and the first electronic device 100 is a device of a first type. At least a proxy service process 110 is installed on the first electronic device 100. The proxy service process 110 is compatible with a first communication interface and a second communication interface. In this embodiment, the proxy service-based device calling method includes the following steps.
901: When the first electronic device 100 successfully performs networking with a second electronic device 200, the first electronic device 100 receives first information of the second electronic device 200, where the first information includes a service capability of the second electronic device 200.
902: Construct a mapping table based on the first information of the second electronic device 200 and interface information of the first electronic device 100, where the mapping table includes a mapping relationship between a plurality of interface functions of the first electronic device 100 and a plurality of service capabilities of the second electronic device 200.
903: When a service capability calling request for the second electronic device 200 is initiated, obtain an interface function corresponding to the service capability calling request.
904: Determine, based on the mapping table and the obtained interface function, a called service capability of the second electronic device 200.
905: Obtain a device ID of the second electronic device 200 from a parameter intent of the service capability calling request, and determine a device type of the second electronic device 200 based on the device ID. The parameter intent includes a parameter used to specify a currently called service capability of the second electronic device 200. If the second electronic device 200 is the device of the first type, S906 is performed. If the second electronic device 200 is a device of a second type, S907 is performed.
906: Transmit the parameter intent to the second electronic device 200 by using a communication mechanism of the first communication interface.
907: Perform protocol conversion on the parameter intent, and transmit a converted parameter intent to the second electronic device 200 by using a communication mechanism of the second communication interface.

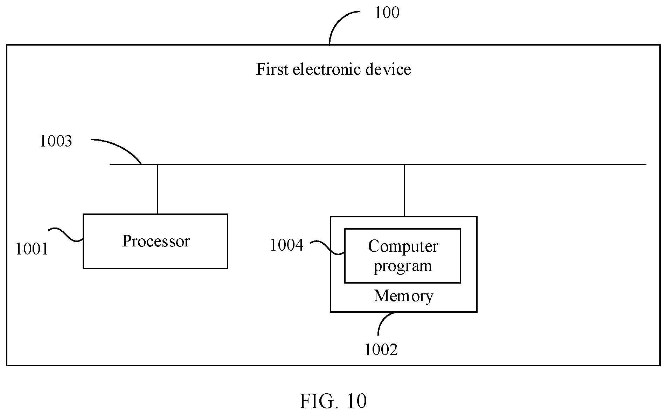

FIG. 10 is a schematic diagram of a hardware structure of a first electronic device 100 according to an embodiment of this application. As shown in FIG. 10, the first electronic device 100 may include a processor 1001, a memory 1002, and a communication bus 1003. The memory 1002 is configured to store one or more computer programs 1004. The one or more computer programs 1004 are configured to be executed by the processor 1001. The one or more computer programs 1004 include instructions. The instructions may be used to perform the steps performed by the first electronic device in the foregoing embodiments, to perform the proxy service-based device calling method on the first electronic device.

It may be understood that the structure shown in this embodiment does not constitute a specific limitation on the first electronic device 100. In some other embodiments, the electronic device may include more or fewer components than those shown in the figure, combine some components, split some components, or have different component arrangements.

The processor 1001 may include one or more processing units. For example, the processor 1001 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

A memory may be further disposed in the processor 1001, and is configured to store instructions and data. In some embodiments, the memory in the processor 1001 is a cache. The memory may store instructions or data that has been used or is cyclically used by the processor 1001. If the processor 1001 needs to use the instructions or the data again, the processor may directly invoke the instructions or the data from the memory. This avoids repeated access, reduces waiting time of the processor 1001, and improves system efficiency.

In some embodiments, the processor 1001 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

In some embodiments, the memory 1002 may include a high-speed random access memory, or may include a non-volatile memory, for example, a hard disk, a memory, a plug-in hard disk, a smart media card (Smart Media Card, SMC), a secure digital (Secure Digital, SD) card, a flash card (Flash Card), at least one magnetic disk storage device, a flash device, or another non-volatile solid-state storage device.

An embodiment further provides a computer storage medium. The computer storage medium stores computer instructions. When the computer instructions are run on an electronic device, the electronic device is enabled to perform the foregoing related method steps to implement the proxy service-based device calling method in the foregoing embodiments.

An embodiment further provides a computer program product. When the computer program product is run on a computer, the computer is enabled to perform the foregoing related steps to implement the proxy service-based device calling method in the foregoing embodiments.

In addition, an embodiment of this application further provides an apparatus. The apparatus may be specifically a chip, a component, or a module, and the apparatus may include a processor and a memory that are connected to each other. The memory is configured to store computer-executable instructions. When the apparatus runs, the processor may execute the computer-executable instructions stored in the memory, so that the chip performs the proxy service-based device calling method in the foregoing method embodiments.

The first electronic device, the computer storage medium, the computer program product, and the chip provided in the embodiments are all configured to perform the corresponding methods provided in the foregoing descriptions. Therefore, for beneficial effects that can be achieved by the first electronic device, the computer storage medium, the computer program product, and the chip, refer to the beneficial effects of the corresponding methods provided in the foregoing descriptions. Details are not described herein again.

Based on the foregoing descriptions of the implementations, a person skilled in the art may clearly understand that for the purpose of convenient and brief description, division into the foregoing functional modules is merely used as an example for description. During actual application, the foregoing functions can be allocated to different functional modules for implementation based on a requirement, in other words, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A proxy service-based device calling method, applied to a first electronic device (100), wherein a proxy service is pre-installed on the first electronic device (100), the proxy service is compatible with a first communication interface and a second communication interface, and the device calling method comprises:
receiving first information of a second electronic device (200) when the first electronic device (100) successfully performs networking with the second electronic device (200), wherein the first information comprises a service capability of the second electronic device (200);
constructing a mapping table based on the first information of the second electronic device (200) and interface information of the first electronic device (100), wherein the mapping table comprises a mapping relationship between a plurality of interface functions of the first electronic device (100) and a plurality of service capabilities of the second electronic device (200);
when a service capability calling request for the second electronic device (200) is initiated, obtaining an interface function corresponding to the service capability calling request;
determining a called service capability of the second electronic device (200) based on the mapping table and the obtained interface function;
obtaining a device ID of the second electronic device (200) from a parameter intent of the service capability calling request, and determining a device type of the second electronic device (200) based on the device ID; and
when the second electronic device (200) is a device of a first type, transmitting the parameter intent to the second electronic device (200) by using a communication mechanism of the first communication interface; or
when the second electronic device (200) is a device of a second type, performing protocol conversion on the parameter intent, and transmitting a converted parameter intent to the second electronic device (200) by using a communication mechanism of the second communication interface, wherein
the first electronic device (100) is the device of the first type, and the parameter intent comprises a parameter used to specify the called service capability of the second electronic device (200).

2. The proxy service-based device calling method according to claim 1, wherein the device calling method further comprises:
when the first electronic device (100) successfully performs networking with the second electronic device (200), allocating corresponding device IDs to the first electronic device (100) and the second electronic device (200) according to a preset device ID generation rule, wherein
the preset device ID generation rule comprises a first generation rule and a second generation rule, the first generation rule is used to generate a device ID of the device of the first type, and the second generation rule is used to generate a device ID of the device of the second type.

3. The proxy service-based device calling method according to claim 1, wherein the receiving first information of a second electronic device (200) when the first electronic device (100) successfully performs networking with the second electronic device (200) comprises:
when the first electronic device (100) successfully performs networking with the second electronic device (200) and the first electronic device (100) detects that the second electronic device (200) is online, receiving the first information sent by the second electronic device (200).

4. The proxy service-based device calling method according to claim 1, wherein the first electronic device (100) comprises a first soft bus (113) configured to perform cross-device communication with the second electronic device (200), the second electronic device (200) comprises a second soft bus (116) configured to perform cross-device communication with the first electronic device (100), and the receiving first information sent by a second electronic device (200) comprises:
receiving, through the first soft bus (113), the first information sent through the second soft bus (116).

5. The proxy service-based device calling method according to any one of claims 1 to 4, wherein the first information further comprises the device ID of the second electronic device (200), and the device calling method further comprises:
constructing a service capability enabling information table for the second electronic device (200) based on the device ID and the service capability of the second electronic device (200), wherein
the enabling information table comprises an enabling status of each service capability of the second electronic device (200).

6. The proxy service-based device calling method according to claim 5, wherein after the step of determining a called service capability of the second electronic device (200) based on the mapping table and the obtained interface function, the method further comprises:
determining, based on the enabling information table, whether the called service capability of the second electronic device (200) is enabled; and
if the called service capability of the second electronic device (200) is disabled, returning calling exception prompt information.

7. The proxy service-based device calling method according to claim 1, wherein the constructing a mapping table based on the first information of the second electronic device (200) and interface information of the first electronic device (100) comprises:
establishing a one-to-one mapping relationship between the plurality of service capabilities of the second electronic device (200) and the plurality of interface functions of the first electronic device (100).

8. The proxy service-based device calling method according to claim 1, wherein the initiating a service capability calling request for the second electronic device (200) comprises:
initiating distributed scheduling to the proxy service through the first communication interface, to initiate the service capability calling request for the second electronic device (200) by using the proxy service.

9. The proxy service-based device calling method according to claim 8, wherein a first application (111) is pre-installed on the first electronic device (100), and the initiating distributed scheduling to the proxy service through the first communication interface comprises:
when the first application (111) requests to initiate the service capability calling request to the second electronic device (200), calling the first communication interface to initiate distributed scheduling to the proxy service.

10. The proxy service-based device calling method according to claim 1, wherein the performing protocol conversion on the parameter intent, and transmitting a converted parameter intent to the second electronic device (200) by using a communication mechanism of the second communication interface comprises:
performing format conversion on a plurality of specified parameters in the parameter intent, and transmitting a plurality of converted specified parameters to the second electronic device (200) by using a SendMessage communication mechanism.

11. The proxy service-based device calling method according to claim 10, wherein the plurality of specified parameters comprise a service ID parameter, an instruction ID parameter, an identity ID parameter, a calling initiator package name parameter, a called entity package name parameter, a calling initiator signature parameter, and a called entity ability name parameter; and the service ID parameter is used to specify a distributed service of the second electronic device (200), the instruction ID parameter is used to specify the called service capability of the second electronic device (200), the identity ID parameter is used to perform identity authentication on an initiator, the calling initiator package name parameter is used to specify a package name of a calling initiation application on the first electronic device (100), the called entity package name parameter is used to specify a package name of a called application on the second electronic device (200), the calling initiator signature parameter is used to specify signature information of the calling initiation application on the first electronic device (100), and the called entity ability name parameter is used to specify an ability name of the called application on the second electronic device (200).

12. The proxy service-based device calling method according to claim 10, wherein after the step of transmitting a plurality of converted specified parameters to the second electronic device (200) by using a SendMessage communication mechanism, the method comprises:
waiting for a response message returned by the second electronic device (200) for reception of the plurality of specified parameters.

13. The proxy service-based device calling method according to claim 1, wherein the performing protocol conversion on the parameter intent, and transmitting a converted parameter intent to the second electronic device (200) by using a communication mechanism of the second communication interface comprises:
performing format conversion on a plurality of specified parameters in the parameter intent, and transmitting a plurality of converted specified parameters to the second electronic device (200) by using a PostMessage communication mechanism.

14. A computer-readable storage medium, comprising computer instructions, wherein when the computer instructions are run on an electronic device, the electronic device is enabled to perform the proxy service-based device calling method according to any one of claims 1 to 13.

15. An electronic device, wherein at least a proxy service is installed on the electronic device, the electronic device comprises a processor (1001) and a memory (1002), the memory (1002) is configured to store instructions, and the processor (1001) is configured to call the instructions in the memory (1002), so that the electronic device performs the proxy service-based device calling method according to any one of claims 1 to 13.

## Patentansprüche

1. Proxy-Dienst-basiertes Vorrichtungsaufrufverfahren, das auf eine erste elektronische Vorrichtung (100) angewendet wird, wobei auf der ersten elektronischen Vorrichtung (100) ein Proxy-Dienst vorinstalliert ist, der Proxy-Dienst mit einer ersten Kommunikationsschnittstelle und einer zweiten Kommunikationsschnittstelle kompatibel ist und das Vorrichtungsaufrufverfahren Folgendes umfasst:
Empfangen erster Informationen einer zweiten elektronischen Vorrichtung (200), wenn die erste elektronische Vorrichtung (100) erfolgreich eine Vernetzung mit der zweiten elektronischen Vorrichtung (200) durchführt, wobei die ersten Informationen eine Dienstfähigkeit der zweiten elektronischen Vorrichtung (200) umfassen;
Erstellen einer Zuordnungstabelle basierend auf den ersten Informationen der zweiten elektronischen Vorrichtung (200) und Schnittstelleninformationen der ersten elektronischen Vorrichtung (100), wobei die Zuordnungstabelle eine Zuordnungsbeziehung zwischen einer Vielzahl von Schnittstellenfunktionen der ersten elektronischen Vorrichtung (100) und einer Vielzahl von Dienstfähigkeiten der zweiten elektronischen Vorrichtung (200) umfasst;
wenn eine Dienstfähigkeitsaufrufanforderung für die zweite elektronische Vorrichtung (200) initiiert wird, Erlangen einer Schnittstellenfunktion, die der Dienstfähigkeitsaufrufanforderung entspricht;
Bestimmen einer aufgerufenen Dienstfähigkeit der zweiten elektronischen Vorrichtung (200) basierend auf der Zuordnungstabelle und der erlangten Schnittstellenfunktion;
Erlangen einer Vorrichtungs-ID der zweiten elektronischen Vorrichtung (200) aus einem Parameter-Intent der Dienstfähigkeitsaufrufanforderung und Bestimmen eines Vorrichtungstyps der zweiten elektronischen Vorrichtung (200) basierend auf der Vorrichtungs-ID; und
wenn die zweite elektronische Vorrichtung (200) eine Vorrichtung eines ersten Typs ist, Übertragen des Parameter-Intents an die zweite elektronische Vorrichtung (200) unter Verwendung eines Kommunikationsmechanismus der ersten Kommunikationsschnittstelle; oder
wenn die zweite elektronische Vorrichtung (200) eine Vorrichtung eines zweiten Typs ist, Durchführen einer Protokollwandlung an dem Parameter-Intent und Übertragen eines gewandelten Parameter-Intents an die zweite elektronische Vorrichtung (200) unter Verwendung eines Kommunikationsmechanismus der zweiten Kommunikationsschnittstelle, wobei
die erste elektronische Vorrichtung (100) die Vorrichtung des ersten Typs ist und der Parameter-Intent einen Parameter umfasst, der verwendet wird, um die aufgerufene Dienstfähigkeit der zweiten elektronischen Vorrichtung (200) zu spezifizieren.

2. Proxy-Dienst-basiertes Vorrichtungsaufrufverfahren nach Anspruch 1, wobei das Vorrichtungsaufrufverfahren ferner Folgendes umfasst:
wenn die erste elektronische Vorrichtung (100) erfolgreich eine Vernetzung mit der zweiten elektronischen Vorrichtung (200) durchführt, Zuweisen entsprechender Vorrichtungs-IDs zu der ersten elektronischen Vorrichtung (100) und der zweiten elektronischen Vorrichtung (200) gemäß einer voreingestellten Regel zur Generierung von Vorrichtungs-IDs, wobei die voreingestellte Regel zur Generierung von Vorrichtungs-IDs eine erste Regel zur Generierung und eine zweite Regel zur Generierung umfasst, wobei die erste Regel zur Generierung zum Generieren einer Vorrichtungs-ID der Vorrichtung des ersten Typs verwendet wird und die zweite Regel zur Generierung zum Generieren einer Vorrichtungs-ID der Vorrichtung des zweiten Typs verwendet wird.

3. Proxy-Dienst-basiertes Vorrichtungsaufrufverfahren nach Anspruch 1, wobei das Empfangen erster Informationen einer zweiten elektronischen Vorrichtung (200), wenn die erste elektronische Vorrichtung (100) erfolgreich eine Vernetzung mit der zweiten elektronischen Vorrichtung (200) durchführt, Folgendes umfasst:
wenn die erste elektronische Vorrichtung (100) erfolgreich eine Vernetzung mit der zweiten elektronischen Vorrichtung (200) durchführt und die erste elektronische Vorrichtung (100) erkennt, dass die zweite elektronische Vorrichtung (200) online ist, Empfangen der ersten Informationen, die durch die zweite elektronische Vorrichtung (200) gesendet werden.

4. Proxy-Dienst-basiertes Vorrichtungsaufrufverfahren nach Anspruch 1, wobei die erste elektronische Vorrichtung (100) einen ersten Soft-Bus (113) umfasst, der zum Durchführen einer vorrichtungsübergreifenden Kommunikation mit der zweiten elektronischen Vorrichtung (200) konfiguriert ist, die zweite elektronische Vorrichtung (200) einen zweiten Soft-Bus (116) umfasst, der zum Durchführen einer vorrichtungsübergreifenden Kommunikation mit der ersten elektronischen Vorrichtung (100) konfiguriert ist, und das Empfangen der ersten Informationen, die durch eine zweite elektronische Vorrichtung (200) gesendet werden, Folgendes umfasst:
Empfangen der ersten Informationen, die über den zweiten Soft-Bus (116) gesendet werden, über den ersten Soft-Bus (113).

5. Proxy-Dienst-basiertes Vorrichtungsaufrufverfahren nach einem der Ansprüche 1 bis 4, wobei die ersten Informationen ferner die Vorrichtungs-ID der zweiten elektronischen Vorrichtung (200) umfassen und das Vorrichtungsaufrufverfahren ferner Folgendes umfasst:
Erstellen einer Dienstfähigkeitsaktivierungsinformationstabelle für die zweite elektronische Vorrichtung (200) basierend auf der Vorrichtungs-ID und der Dienstfähigkeit der zweiten elektronischen Vorrichtung (200), wobei
die Aktivierungsinformationstabelle einen Aktivierungsstatus jeder Dienstfähigkeit der zweiten elektronischen Vorrichtung (200) umfasst.

6. Proxy-Dienst-basiertes Vorrichtungsaufrufverfahren nach Anspruch 5, wobei das Verfahren nach dem Schritt des Bestimmens einer aufgerufenen Dienstfähigkeit der zweiten elektronischen Vorrichtung (200) basierend auf der Zuordnungstabelle und der erlangten Schnittstellenfunktion ferner Folgendes umfasst:
Bestimmen, basierend auf der Aktivierungsinformationstabelle, ob die aufgerufene Dienstfähigkeit der zweiten elektronischen Vorrichtung (200) aktiviert ist; und
falls die aufgerufene Dienstfähigkeit der zweiten elektronischen Vorrichtung (200) deaktiviert ist, Zurücksenden von Aufrufausnahme-Eingabeaufforderungsinformationen.

7. Proxy-Dienst-basiertes Vorrichtungsaufrufverfahren nach Anspruch 1, wobei das Erstellen einer Zuordnungstabelle basierend auf den ersten Informationen der zweiten elektronischen Vorrichtung (200) und den Schnittstelleninformationen der ersten elektronischen Vorrichtung (100) Folgendes umfasst:
Herstellen einer Eins-zu-eins-Zuordnungsbeziehung zwischen der Vielzahl von Dienstfähigkeiten der zweiten elektronischen Vorrichtung (200) und der Vielzahl von Schnittstellenfunktionen der ersten elektronischen Vorrichtung (100).

8. Proxy-Dienst-basiertes Vorrichtungsaufrufverfahren nach Anspruch 1, wobei das Initiieren einer Dienstfähigkeitsaufrufanforderung für die zweite elektronische Vorrichtung (200) Folgendes umfasst:
Initiieren einer verteilten Planung für den Proxy-Dienst über die erste Kommunikationsschnittstelle, um die Dienstfähigkeitsaufrufanforderung für die zweite elektronische Vorrichtung (200) unter Verwendung des Proxy-Dienstes zu initiieren.

9. Proxy-Dienst-basiertes Vorrichtungsaufrufverfahren nach Anspruch 8, wobei eine erste Anwendung (111) auf der ersten elektronischen Vorrichtung (100) vorinstalliert ist und das Initiieren der verteilten Planung für den Proxy-Dienst über die erste Kommunikationsschnittstelle Folgendes umfasst:
wenn die erste Anwendung (111) anfordert, die Dienstfähigkeitsaufrufanforderung an die zweite elektronische Vorrichtung (200) zu initiieren, Aufrufen der ersten Kommunikationsschnittstelle zum Initiieren einer verteilten Planung für den Proxy-Dienst.

10. Proxy-Dienst-basiertes Vorrichtungsaufrufverfahren nach Anspruch 1, wobei das Durchführen einer Protokollwandlung an dem Parameter-Intent und das Übertragen eines gewandelten Parameter-Intents an die zweite elektronische Vorrichtung (200) unter Verwendung eines Kommunikationsmechanismus der zweiten Kommunikationsschnittstelle Folgendes umfasst:
Durchführen einer Formatwandlung an einer Vielzahl von spezifizierten Parametern in dem Parameter-Intent und Übertragen einer Vielzahl gewandelter spezifizierter Parameter an die zweite elektronische Vorrichtung (200) unter Verwendung eines SendMessage-Kommunikationsmechanismus.

11. Proxy-Dienst-basiertes Vorrichtungsaufrufverfahren nach Anspruch 10, wobei die Vielzahl von spezifizierten Parametern einen Dienst-ID-Parameter, einen Anweisungs-ID-Parameter, einen Identitäts-ID-Parameter, einen Paketnamenparameter des aufrufenden Initiators, einen Paketnamenparameter der aufgerufenen Entität, einen Signaturparameter des aufrufenden Initiators und einen Befähigungsnamenparameter der aufgerufenen Entität umfasst; und der Dienst-ID-Parameter verwendet wird, um einen verteilten Dienst der zweiten elektronischen Vorrichtung (200) zu spezifizieren, der Anweisungs-ID-Parameter verwendet wird, um die Fähigkeit des aufgerufenen Dienstes der zweiten elektronischen Vorrichtung (200) zu spezifizieren, der Identitäts-ID-Parameter verwendet wird, um eine Identitätsauthentifizierung an einem Initiator durchzuführen, der Paketnamenparameter des aufrufenden Initiators verwendet wird, um einen Paketnamen einer aufrufenden Initiierungsanwendung auf der ersten elektronischen Vorrichtung (100) zu spezifizieren, der Paketnamenparameter der aufgerufenen Entität verwendet wird, um einen Paketnamen einer aufgerufenen Anwendung auf der zweiten elektronischen Vorrichtung (200) zu spezifizieren, der Signaturparameter des aufrufenden Initiators verwendet wird, um Signaturinformationen der aufrufenden Initiierungsanwendung auf der ersten elektronischen Vorrichtung (100) zu spezifizieren, und der Befähigungsnamenparameter der aufgerufenen Entität verwendet wird, um einen Befähigungsnamen der aufgerufenen Anwendung auf der zweiten elektronischen Vorrichtung (200) zu spezifizieren.

12. Proxy-Dienst-basiertes Vorrichtungsaufrufverfahren nach Anspruch 10, wobei das Verfahren nach dem Schritt des Übertragens einer Vielzahl gewandelter spezifizierter Parameter an die zweite elektronische Vorrichtung (200) unter Verwendung eines SendMessage-Kommunikationsmechanismus Folgendes umfasst: Warten auf eine durch die zweite elektronische Vorrichtung (200) zurückgesendete Antwortnachricht zum Empfang der Vielzahl von spezifizierten Parametern.

13. Proxy-Dienst-basiertes Vorrichtungsaufrufverfahren nach Anspruch 1, wobei das Durchführen einer Protokollwandlung an dem Parameter-Intent und das Übertragen eines gewandelten Parameter-Intents an die zweite elektronische Vorrichtung (200) unter Verwendung eines Kommunikationsmechanismus der zweiten Kommunikationsschnittstelle Folgendes umfasst:
Durchführen einer Formatwandlung an einer Vielzahl von spezifizierten Parametern in dem Parameter-Intent und Übertragen einer Vielzahl gewandelter spezifizierter Parameter an die zweite elektronische Vorrichtung (200) unter Verwendung eines PostMessage-Kommunikationsmechanismus.

14. Computerlesbares Speichermedium, Computeranweisungen umfassend, wobei, wenn die Computeranweisungen auf einer elektronischen Vorrichtung ausgeführt werden, es der elektronischen Vorrichtung ermöglicht wird, das Proxy-Dienstbasierte Vorrichtungsaufrufverfahren nach einem der Ansprüche 1 bis 13 durchzuführen.

15. Elektronische Vorrichtung, wobei auf der elektronischen Vorrichtung mindestens ein Proxy-Dienst installiert ist, die elektronische Vorrichtung einen Prozessor (1001) und einen Speicher (1002) umfasst, der Speicher (1002) zum Speichern von Anweisungen konfiguriert ist und der Prozessor (1001) zum Aufrufen der Anweisungen in dem Speicher (1002) konfiguriert ist, sodass die elektronische Vorrichtung das Proxy-Dienstbasierte Vorrichtungsaufrufverfahren einem der Ansprüche 1 bis 13 durchführt.

## Revendications

1. Procédé d'appel de dispositif à base de services mandataires, appliqué à un premier dispositif électronique (100), dans lequel un service mandataire est préinstallé sur le premier dispositif électronique (100), le service mandataire est compatible avec une première interface de communication et une seconde interface de communication, et le procédé d'appel de dispositif comprend :
la réception de premières informations d'un second dispositif électronique (200) lorsque le premier dispositif électronique (100) réalise avec succès une mise en réseau avec le second dispositif électronique (200), dans lequel les premières informations comprennent une capacité de service du second dispositif électronique (200) ;
la construction d'une table de mappage sur la base des premières informations du second dispositif électronique (200) et des informations d'interface du premier dispositif électronique (100), dans lequel la table de mappage comprend une relation de mappage entre une pluralité de fonctions d'interface du premier dispositif électronique (100) et une pluralité de capacités de service du second dispositif électronique (200) ;
lorsqu'une demande d'appel de capacité de service pour le second dispositif électronique (200) est initiée, l'obtention d'une fonction d'interface correspondant à la demande d'appel de capacité de service ;
la détermination d'une capacité de service appelée du second dispositif électronique (200) sur la base de la table de mappage et de la fonction d'interface obtenue ;
l'obtention d'un identifiant de dispositif du second dispositif électronique (200) à partir d'un paramètre d'intention de la demande **d'appel** de capacité de service, et la détermination d'un type de dispositif du second dispositif électronique (200) sur la base de l'identifiant de dispositif ; et
lorsque le second dispositif électronique (200) est un dispositif d'un premier type, la transmission de l'intention de paramètre au second dispositif électronique (200) à l'aide d'un mécanisme de communication de la première interface de communication ; ou
lorsque le second dispositif électronique (200) est un dispositif d'un second type, la réalisation d'une conversion de protocole sur l'intention de paramètre, et la transmission d'une intention de paramètre convertie au second dispositif électronique (200) à l'aide d'un mécanisme de communication de la seconde interface de communication, dans lequel
le premier dispositif électronique (100) est le dispositif du premier type, et l'intention de paramètre comprend un paramètre utilisé pour spécifier la capacité de service appelée du second dispositif électronique (200).

2. Procédé d'appel de dispositif à base de services mandataires selon la revendication 1, dans lequel le procédé d'appel de dispositif comprend également :
lorsque le premier dispositif électronique (100) réalise avec succès une mise en réseau avec le second dispositif électronique (200), l'attribution des identifiants de dispositif correspondants au premier dispositif électronique (100) et au second dispositif électronique (200) selon une règle de génération d'identifiants de dispositif prédéfinie, dans lequel
la règle de génération d'identifiants de dispositif prédéfinie comprend une règle de première génération et une règle de seconde génération, la règle de première génération est utilisée pour générer un identifiant de dispositif du dispositif du premier type, et la règle de seconde génération est utilisée pour générer un identifiant de dispositif du dispositif du second type.

3. Procédé d'appel de dispositif à base de services mandataires selon la revendication **1,** dans lequel la réception de premières informations d'un second dispositif électronique (200) lorsque le premier dispositif électronique (100) réalise avec succès une mise en réseau avec le second dispositif électronique (200) comprend :
lorsque le premier dispositif électronique (100) réalise avec succès une mise en réseau avec le second dispositif électronique (200) et que le premier dispositif électronique (100) détecte que le second dispositif électronique (200) est en ligne, la réception des premières informations envoyées par le second dispositif électronique (200).

4. Procédé d'appel de dispositif à base de services mandataires selon la revendication 1, dans lequel le premier dispositif électronique (100) comprend un premier bus logiciel (113) configuré pour réaliser une communication inter-dispositifs avec le second dispositif électronique (200), le second dispositif électronique (200) comprend un second bus logiciel (116) configuré pour réaliser une communication inter-dispositifs avec le premier dispositif électronique (100), et la réception de premières informations envoyées par un second dispositif électronique (200) comprend :
la réception, par l'intermédiaire du premier bus logiciel (113), des premières informations envoyées par l'intermédiaire du second bus logiciel (116).

5. Procédé d'appel de dispositif à base de services mandataires selon l'une quelconque des revendications 1 à 4, dans lequel les premières informations comprennent également l'identifiant de dispositif du second dispositif électronique (200), et le procédé d'appel de dispositif comprend également :
la construction d'une table d'informations d'activation de capacité de service pour le second dispositif électronique (200) sur la base de l'identifiant de dispositif et de la capacité de service du second dispositif électronique (200), dans lequel
la table d'informations d'activation comprend un état d'activation de chaque capacité de service du second dispositif électronique (200).

6. Procédé d'appel de dispositif à base de services mandataires selon la revendication 5, dans lequel, après l'étape de détermination d'une capacité de service appelé du second dispositif électronique (200) sur la base de la table de mappage et de la fonction d'interface obtenue, le procédé comprend également :
le fait de déterminer, sur la base de la table d'informations d'activation, si la capacité de service appelée du second dispositif électronique (200) est activée ; et
si la capacité de service appelée du second dispositif électronique (200) est désactivée, le renvoi d'informations d'invite d'exception d'appel.

7. Procédé d'appel de dispositif à base de services mandataires selon la revendication 1, dans lequel la construction d'une table de mappage sur la base des premières informations du second dispositif électronique (200) et des informations d'interface du premier dispositif électronique (100) comprend :
l'établissement d'une relation de mappage biunivoque entre la pluralité de capacités de service du second dispositif électronique (200) et la pluralité de fonctions d'interface du premier dispositif électronique (100).

8. Procédé d'appel de dispositif à base de services mandataires selon la revendication 1, dans lequel l'initiation d'une demande d'appel de capacité de service pour le second dispositif électronique (200) comprend :
l'initiation d'une planification distribuée au service mandataire par l'intermédiaire de la première interface de communication, pour initier la demande d'appel de capacité de service pour le second dispositif électronique (200) à l'aide du service mandataire.

9. Procédé d'appel de dispositif à base de services mandataires selon la revendication 8, dans lequel une première application (111) est préinstallée sur le premier dispositif électronique (100), et l'initiation de la planification distribuée au service mandataire par l'intermédiaire de la première interface de communication comprend :
lorsque la première application (111) demande d'initier la demande d'appel de capacité de service au second dispositif électronique (200), l'appel de la première interface de communication pour initier la planification distribuée au service mandataire.

10. Procédé d'appel de dispositif à base de services mandataires selon la revendication 1, dans lequel la réalisation d'une conversion de protocole sur l'intention de paramètre, et la transmission d'une intention de paramètre convertie au second dispositif électronique (200) à l'aide d'un mécanisme de communication de la seconde interface de communication comprennent :
la réalisation d'une conversion de format sur une pluralité de paramètres spécifiés dans l'intention de paramètre, et la transmission d'une pluralité de paramètres spécifiés convertis au second dispositif électronique (200) à l'aide d'un mécanisme de communication SendMessage.

11. Procédé d'appel de dispositif à base de services mandataires selon la revendication 10, dans lequel la pluralité de paramètres spécifiés comprennent un paramètre d'identifiant de service, un paramètre d'identifiant d'instruction, un paramètre d'identifiant d'identité, un paramètre de nom de package d'initiateur d'appel, un paramètre de nom de package d'entité appelée, un paramètre de signature d'initiateur d'appel, et un paramètre de nom de capacité d'entité appelée ; et le paramètre d'identifiant de service est utilisé pour spécifier un service distribué du second dispositif électronique (200), le paramètre d'identifiant d'instruction est utilisé pour spécifier la capacité de service appelée du second dispositif électronique (200), le paramètre d'identifiant d'identité est utilisé pour réaliser une authentification d'identité sur un initiateur, le paramètre de nom de package d'initiateur d'appel est utilisé pour spécifier un nom de package d'une application d'initiation d'appel sur le premier dispositif électronique (100), le paramètre de nom de package d'entité appelée est utilisé pour spécifier un nom de package d'une application appelée sur le second dispositif électronique (200), le paramètre de signature d'initiateur d'appel est utilisé pour spécifier des informations de signature de l'application d'initiation d'appel sur le premier dispositif électronique (100), et le paramètre de nom de capacité d'entité appelée est utilisé pour spécifier un nom de capacité de l'application appelée sur le second dispositif électronique (200).

12. Procédé d'appel de dispositif à base de services mandataires selon la revendication 10, dans lequel, après l'étape de transmission d'une pluralité de paramètres spécifiés convertis au second dispositif électronique (200) à l'aide d'un mécanisme de communication SendMessage, le procédé comprend :
l'attente d'un message de réponse renvoyé par le second dispositif électronique (200) pour la réception de la pluralité de paramètres spécifiés.

13. Procédé d'appel de dispositif à base de services mandataires selon la revendication 1, dans lequel la réalisation d'une conversion de protocole sur l'intention de paramètre, et la transmission d'une intention de paramètre convertie au second dispositif électronique (200) à l'aide d'un mécanisme de communication de la seconde interface de communication comprennent :
la réalisation d'une conversion de format sur une pluralité de paramètres spécifiés dans l'intention de paramètre, et la transmission d'une pluralité de paramètres spécifiés convertis au second dispositif électronique (200) à l'aide d'un mécanisme de communication PostMessage.

14. Support de stockage lisible par ordinateur, comprenant des instructions informatiques, dans lequel, lorsque les instructions informatiques sont exécutées sur un dispositif électronique, le dispositif électronique est activé pour réaliser le procédé d'appel de dispositif à base de services mandataires selon l'une quelconque des revendications 1 à 13.

15. Dispositif électronique, dans lequel au moins un service mandataire est installé sur le dispositif électronique, le dispositif électronique comprend un processeur (1001) et une mémoire (1002), la mémoire (1002) est configurée pour stocker des instructions, et le processeur (1001) est configuré pour appeler les instructions dans la mémoire (1002), de sorte que le dispositif électronique réalise le procédé d'appel de dispositif à base de services mandataires selon l'une quelconque des revendications 1 à 13.
